# EUROPÄISCHE PATENTSCHRIFT

(11) **EP 2 014 150 B1**
(45) Veröffentlichungstag und Bekanntmachung des Hinweises auf die Patenterteilung: **21.07.2010**
(21) Anmeldenummer: 08011749.2
(22) Anmeldetag: 28.06.2008
(51) Int. Cl.: A01F 15/07

(54) **Ballenpresse mit Bindematerialversorgung**
Baling press with wrapping material supply
Presse à balles dotée d'aprovisionnement de materiel pour envelopper

(30) Priorität: 12.07.2007 DE 102007032859
(43) Veröffentlichungstag der Anmeldung: 14.01.2009
(73) Patentinhaber: CLAAS Selbstfahrende Erntemaschinen GmbH, 33426 Harsewinkel (DE)
(72) Erfinder: Schröder, Olaf, 27804 Berne (DE)
(74) Vertreter: Heuer, Wilhelm

(56) Entgegenhaltungen:
- WO-A-2005/096801
- US-A- 4 956 968
- US-A1- 2004 016 204
- US-B1- 6 209 450

## Beschreibung

Die vorliegende Erfindung betrifft eine Ballenpresse zum Pressen von landwirtschaftlichem Erntegut, mit einer Presskammer, die wenigstens eine gekoppelt an eine Drehung eines Ballens in der Presskammer rotierende Rolle aufweist, einem Bindematerialspender, einer Bindematerialfördereinheit zum Zuführen von vom Bindematerialspender abgegebenen Bindematerial zu einem Einlassspalt der Presskammer und einer Kappeinrichtung zum Durchtrennen des Bindematerials, wobei die Bindematerialfördereinheit zwischen einer Ruhestellung und einer Arbeitsstellung bewegbar ist. Eine derartige Ballenpresse ist aus US6 981 352 B2 (US 2004 016204 A1) bekannt.

Wenn bei dieser bekannten Ballenpresse der Ballen fertig mit Bindematerial umwickelt ist, wird die Bindematerialfördereinheit in ihre Ruhestellung zurückgezogen, und ein frei zwischen der zurückgezogenen Bindematerialfördereinheit und dem Einlassspalt der Presskammer gespanntes Stück des Bindematerials wird zwischen einem beweglichen und einem ortsfesten Messer der Kappeinrichtung durchtrennt. Dabei muss ein über die Spitze der Fördereinheit überstehender Abschnitt des Bindematerials an der Bindematerialfördereinheit zurückbleiben, so dass, wenn die Fördereinheit wieder in den Spalt eingeführt wird, um einen neuen Ballen zu umwickeln, der überstehende Abschnitt von einer der den Spalt begrenzenden Rollen erfasst, mitgenommen und in die Presskammer hineingezogen werden kann. Wenn das Hineinziehen des führenden Abschnittes des Bindematerials in die Presskammer misslingt, kann ohne vorhergehenden Benutzereingriff kein weiterer Ballen gebunden werden.

Aufgabe der vorliegenden Erfindung ist, eine Ballenpresse mit Bindematerialversorgung zu schaffen, bei der das Einführen des Bindematerials in die Presskammer zu Beginn eines Bindevorganges mit hoher Zuverlässigkeit gelingt.

Die Aufgabe wird gelöst, indem bei einer Ballenpresse der eingangs angegebenen Art die Bindematerialfördereinheit eine Antriebsrolle aufweist, die in der Arbeitsstellung durch kraftschlüssigen Kontakt, insbesondere Reibkontakt, mit der Rolle der Presskammer angetrieben ist und in der Ruhestellung von der Rolle der Presskammer abgestellt ist.

Indem die Bindematerialfördereinheit über die Antriebsrolle angetrieben ist, kann das Bindematerial von der Fördereinheit aktiv in den Spalt der Presskammer eingeschoben werden, so dass es nicht darauf ankommt, ob und wie weit bereits beim Verschieben in die Arbeitsstellung ein führender Abschnitt des Bindematerials über die Spitze der Bindematerialfördereinheit übersteht.

Vorzugsweise ist die Kappeinrichtung an die Bewegung der Bindematerialfördereinheit zwischen der Ruhestellung und der Arbeitsstellung gekoppelt, um das Bindematerial bei Erreichen der Ruhestellung zu kappen. Ein eigener Motor für die Kappeinrichtung ist dann nicht erforderlich.

Um das Bindematerial anzutreiben, umfasst die Bindematerialfördereinheit vorzugsweise einen Rahmen, der wenigstens eine von dem Bindematerial umschlungene Walze trägt, und einen die Antriebsrolle tragenden Arm, der mit dem Rahmen um die Achse der Walze schwenkbar verbunden ist und über den die Antriebsrolle an die Walze drehgekoppelt ist. So wird die umschlungene Walze drehangetrieben, sobald die Antriebsrolle in kraftschlüssigen Kontakt mit der Rolle der Presskammer getreten ist. Indem das Bindematerial erst vorgeschoben wird, wenn die Fördereinheit in der Arbeitsstellung ist, wird die Gefahr vermieden, dass das Bindematerial nicht korrekt in den Spalt eingeführt und in der Folge nicht korrekt vom Ballen mitgenommen wird oder von einer zum Zerkleinern des Pressgutes vor dessen Einführung in die Presskammer dienenden Messerwalze erfasst wird.

Die Antriebsrolle und die umschlungene Walze sind vorzugsweise durch einen Riemen- oder Kettentrieb miteinander gekoppelt.

Um das Bindematerial auch dann zuverlässig anzutreiben, wenn es nicht unter Spannung steht und dadurch an die umschlungene Walze angedrückt ist, begrenzt die umschlungene Walze vorzugsweise zusammen mit einer Gegendruckwalze einen das Bindematerial klemmenden Spalt.

Um sicherzustellen, dass nicht mehr Bindematerial von der Fördereinheit gefördert wird, als in der Presskammer benötigt wird, ist die Umfangsgeschwindigkeit der über die Antriebsrolle angetriebenen umschlungenen Walze vorzugsweise kleiner als die des Ballens, und ein Freilauf ist zwischen der Antriebsrolle und der umschlungenen Walze angeordnet, um dieser eine Drehung mit einer höheren Umfangsgeschwindigkeit zu ermöglichen, sobald das Bindematerial von dem in der Presskammer rotierenden Ballen erfasst worden ist und mitgenommen wird.

Alternativ kann zu demselben Zweck die Rolle der Presskammer über einen Freilauf angetrieben ist, der eine Drehung der umschlungenen Walze mit einer höheren Umfangsgeschwindigkeit ermöglicht.

Um die Bindematerialfördereinheit zwischen der Ruhestellung und der Arbeitsstellung zu bewegen, ist die Bindematerialfördereinheit vorzugsweise um eine zweite von dem Bindematerial umschlungene Walze schwenkbar. Eine solche Schwenkbewegung ermöglicht eine Verstellung der Bindematerialfördereinheit zwischen Ruhestellung und Arbeitsstellung praktisch ohne eine damit zusammenhängende Bewegung des führenden Endes des Bindematerials in Bezug auf die Spitze der Fördereinheit. Es besteht daher keine Gefahr, dass sich aufgrund der Bewegung zwischen Arbeits- und Ruhestellung das Bindematerial in der Fördereinheit verschiebt.

Die Kappeinrichtung kann in an sich bekannter Weise ein um eine Achse schwenkbares Messer umfassen. Erfindungsgemäß ist vorzugsweise ferner ein Kurvenbahnglied vorgesehen, das mit dem Messer drehfest verbunden ist und mit der Bindematerialfördereinheit in Eingriff steht. Ein solches Kurvenbahnglied kann dazu dienen, das Messer gekoppelt an die Bewegung der Bindematerialfördereinheit zwischen Arbeits- und Ruhestellung anzutreiben.

Besonders bevorzugt ist die Bindematerialfördereinheit in der Ruhestellung der Achse des Messers näher benachbart als in der Arbeitsstellung. Bei einer solchen Anordnung wird der Hebelarm zwischen dem Kurvenbahnglied und der mit ihr im Eingriff stehenden Bindematerialfördereinheit gegen Ende von deren Bewegung in die Ruhestellung immer kürzer. Dementsprechend wird das Messer gegen Ende der Bewegung zur Ruhestellung immer schneller und kann den Bindematerialstrang gut durchschlagen.

Zweckmäßigerweise ist die Kappeinrichtung eingerichtet, das Bindematerial innerhalb der Bindematerialfördereinheit zu durchtrennen. So bleibt zwischen zwei Wickelvorgängen kein über die Spitze der Bindematerialfördereinheit überstehender Bindematerialabschnitt zurück, der leicht biegsam ist und schwierig in den Einlassspalt einzuführen ist.

Vorteilhaft ist ferner, wenn die Spitze der Bindematerialfördereinheit durch eine Führungsplatte gebildet ist, an deren Unterseite das Bindematerial entlang geführt ist, und in der Ruhestellung die Kappeinrichtung das Bindematerial an der Führungsplatte durchtrennt. Da somit das Bindematerial nicht über die Spitze der Führungsplatte vorstehen muss, kann diese zuverlässig auch gegen einen eventuellen Widerstand in den Spalt der Presskammer vordringen und das führende Ende des Bindematerialstranges dort platzieren. Andererseits ist das führende Ende der Bindematerialbahn nah genug an der Spitze, um anschließend, wenn die Bindematerialbahn angetrieben wird, den Weg durch den Spalt zuverlässig zu finden.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Längsschnitt der erfindungsgemäßen Ballenpresse;
- Fig. 2: eine perspektivische Ansicht des Bindematerialspenders und der Bindematerialfördereinheit der Ballenpresse aus Fig. 1;
- Fig. 3: einen vergrößerten Schnitt durch den Bindematerialspender und die Bindematerialfördereinheit;
- Fig. 4: eine Seitenansicht der Bindematerialfördereinheit in Ruhestellung; und
- Fig. 5: eine zu Fig. 4 analoge Seitenansicht der Bindematerialfördereinheit in Arbeitsstellung.

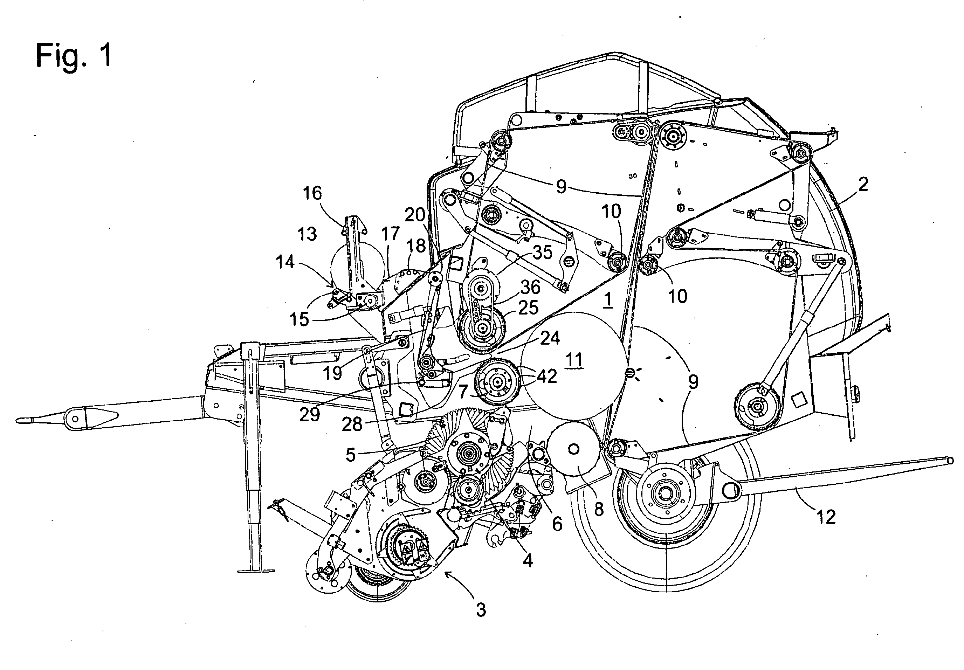

Die in Fig. 1 in Seitenansicht gezeigte Rundballenpresse hat ein eine Presskammer 1 umschließendes Gehäuse 2 und einen Erntegutaufnehmer 3 zum Sammeln von geschnittenem Erntegut vom Boden und Zuführen des Erntegutes zu der Presskammer 1. An einem sich zwischen dem Erntegutaufnehmer 3 und der Presskammer 1 erstreckenden Zuführkanal 4 ist eine rotierende Messerwalze 5 zum Zerkleinern des Erntegutes angeordnet. Die Messerwalze 5 fördert das Erntegut durch einen Einlassspalt 6 zwischen zwei Walzen 7, 8 in die Presskammer 1.

Die Presskammer ist in an sich bekannter Weise durch zwei Sätze von Endlosriemen 9 begrenzt, die auf Rollen umlaufen. Von diesen Rollen sind wenigstens einige, in der Figur mit 10 bezeichnet, beweglich, um die Größe der Presskammer 1 einem sich darin aus dem Erntegut bildenden Pressballen 11 anzupassen.

Wenn der Pressballen 11 eine Sollgröße erreicht hat, muss er aus der Presse ausgegeben werden. Dazu wird er zunächst mit einem Bindematerial umhüllt, um zu verhindern, dass sich der Pressballen 11 außerhalb der Presse wieder auflöst, anschließend wird eine hintere Hälfte des Gehäuses 2 hochgeklappt, so dass der Ballen 11 aus der Presse heraus über eine Rampe 12 auf den Boden rollen kann.

Je nach Art des Erntematerials und seiner beabsichtigten Verwendung kann das verwendete Bindematerial unterschiedlich sein, zum Beispiel ein Netz, eine Folie oder ein Garn. Eine Vorratsrolle 13 des Bindematerials ist in einem Bindematerialspender 14 an der Vorderseite des Gehäuses 2 gelagert. Der Bindematerialspender 14 umfasst eine Mehrzahl von Walzen 15, auf denen die Vorratsrolle 13 stabil ruht, sowie einen höhenverstellbaren Auflieger 16, der in Fig. 1 von der Vorratsrolle 13 beabstandet dargestellt ist, im Betrieb aber auf der Vorratsrolle 13 aufliegt, um zu verhindern, dass diese durch bei der Bewegung der Ballenpresse auftretende Erschütterungen aus einer von den Walzen 15 gebildeten Mulde herausgeschleudert wird.

Eine Bindematerialbahn 17 erstreckt sich vom Spender 14 durch eine Schikane 18 zu einer Bindematerialfördereinrichtung 19.

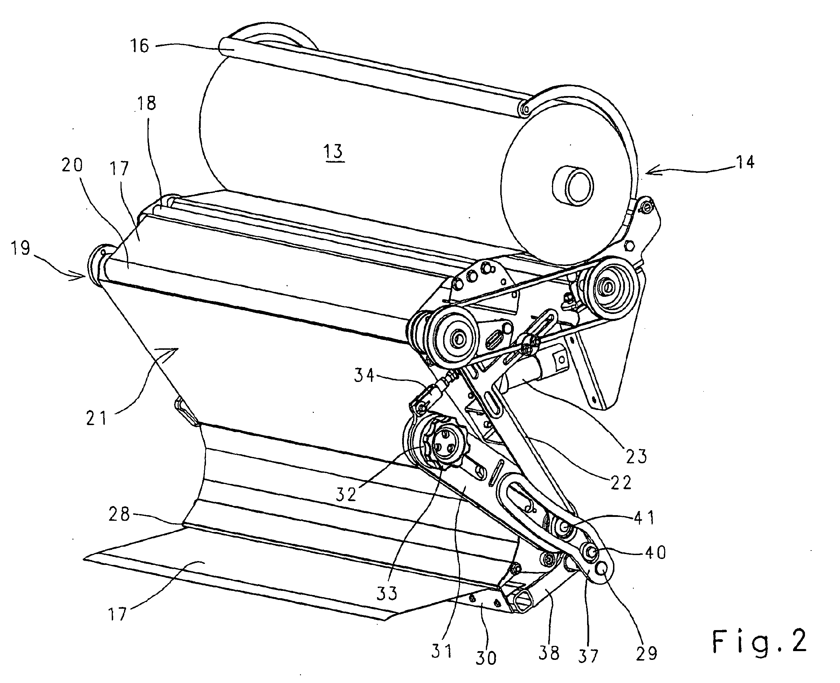

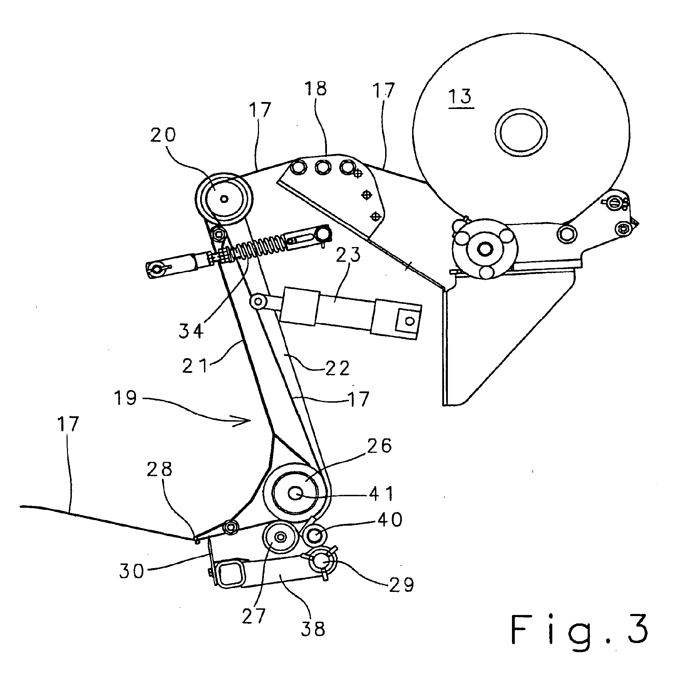

Der Bindematerialspender 14, die Schikane 18 und die Bindematerialfördereinrichtung 19 sind in Fig. 2 und 3 jeweils in einer perspektivischen Ansicht bzw. einer Seitenansicht dargestellt. Die Schikane 18 umfasst drei Walzen von geringem Durchmesser, zwischen denen die Bindematerialbahn 17 unter Richtungswechseln hindurchgeführt ist. Sie dient zur Vergleichmäßigung von Lauf und Spannung der Bindematerialbahn 17 während des Umwickelns des Pressballens 11 mit dem Bindematerial.

Ein von der Bindematerialbahn 17 umschlungene Walze 20 mit in Bezug auf das Gehäuse 2 ortsfester Achse bildet den Eingang der Bindematerialfördereinrichtung 19. Zwei zwischen sich ein geschwungenes Führungsblech 21 tragende Arme 22 sind um die Achse der Walze 20, angetrieben durch ein hydraulisches Stellglied 23, zwischen einer in Fig. 1 gezeigten Ruhestellung und einer Arbeitsstellung bewegbar, in der ein von der Walze 20 abgewandter unterer Rand 28 des Führungsbleches 21 in einen Spalt 24 zwischen der Walze 7 und einer von dem Riemen 9 umschlungenen Walze 25 eingreift. Während der Pressballen 11 gebildet wird, befinden sich die Arme 22 in der Ruhestellung, so dass der Spalt 24 offen ist, und Pressgut, das durch den bezogen auf Fig. 1 im Uhrzeigersinn umlaufenden Endlosriemen 9 vom Pressballen 11 in Richtung des Spaltes 24 mitgenommen wird, wird großenteils durch die ebenfalls im Uhrzeigersinn rotierende Walze 7 von dem Riemen 9 abgestreift und zurück in die Presskammer 1 auf den Pressballen 11 befördert. Vorsprünge 42, z.B. in Form von im Wesentlichen achsparallelen Rippen, am Umfang der Walze 7 fördern diese Abstreifwirkung. Pressgut, das von der Walze 7 nicht erfasst wird und den Spalt 24 passiert, fällt durch einen Zwischenraum zwischen der Walze 7 und dem unteren Rand 28 des in Ruhestellung befindlichen Führungsbleches 21 auf die Messerwalze 5 und wird von dieser zurück in den Zuführkanal 4 befördert.

Wie insbesondere Fig. 3 zeigt, verläuft die Bindematerialbahn 17 von der ortsfesten Walze 20 aus über eine von der Presskammer 1 abgewandte Seite des Führungsbleches 21 steil abwärts bis zu einer von den Armen 22 getragenen gummierten Walze 26, um diese herum und durch einen Klemmspalt zwischen der gummierten Walze 26 und einer ebenfalls von den Armen 22 getragenen Gegendruckwalze 27 und von dort aus auf einem leicht abschüssigen Weg zu der unteren Kante 28.

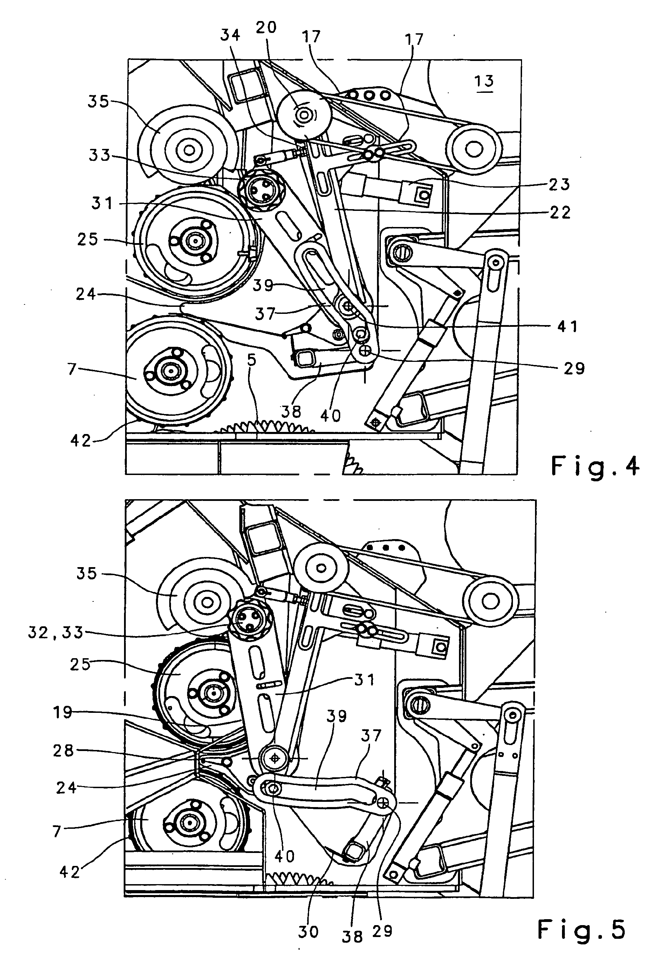

Wie insbesondere in Fig. 2 und Fig. 4 zu erkennen, ist an einen der Arme 22 ein Arm 31 um die Achse 41 der gummierten Walze 26 schwenkbar angelenkt. Der Arm 31 trägt an seinem freien Ende eine Reibrolle 32 und ein Handrad 33. Die Reibrolle 32 und das Handrad 33 sind untereinander drehfest verbunden und über einen im Inneren des Armes 31 verborgenen Ketten- oder Riementrieb an die gummierte Walze 26 drehgekoppelt. Die Reibrolle 32 hat einen etwas kleineren Durchmesser als das Handrad 33 und ist deshalb in der Seitenansicht der Fig. 4 von letzterem verdeckt. Eine Feder 34 spreizt das freie obere Ende des Armes 31 von dem Arm 22 ab. Mit Hilfe des Handrades 33 kann ein Benutzer Bindematerial bei Bedarf, insbesondere beim Einlegen einer neuen Vorratsrolle 13, auch fördern, während die Bindematerialfördereinrichtung 19 sich in der Ruhestellung befindet.

Wenn der Pressballen 11 ein Sollmaß erreicht hat und mit dem Bindematerial umwickelt werden soll, wird das hydraulische Stellglied 23 ausgefahren, um die Bindematerialfördereinrichtung 19 aus der Ruhestellung der Fig. 1 bzw. 4 in ihre in Fig. 5 gezeigte Arbeitsstellung zu bringen, in der der untere Rand des Führungsbleches 21 in dem Spalt 24 eingreift. Auf dem Weg der Bindematerialfördereinrichtung 19 in die Arbeitsstellung kommt ihre Reibrolle 32 in Reibkontakt mit einer komplementären Reibrolle 35, die über einen Zahnriemen 36 oder eine Kette (siehe Fig. 1) an die Walze 25 drehgekoppelt ist. Sobald der Reibschluss zwischen den Reibrollen 32, 35 hergestellt ist, ist die gummierte Walze 26 an die Umlaufbewegung der Riemen 9 gekoppelt und wird dadurch drehangetrieben. Dadurch wird die im Spalt zwischen der gummierten Walze 26 und der Gegendruckwalze 27 geklemmte Bindematerialbahn 17 vorwärts gefördert.

Zwischen einer die Reibrolle 35 tragenden Welle 43 und der gummierten Walze 26 ist ein Freilauf vorgesehen, der zwar die Übertragung der Drehung der Welle 43 auf die Walze 26 gewährleistet, aber eine Drehung der Walze 26 auch ohne eine entsprechende Drehung der Welle 43 erlaubt. Der Freilauf ist von beliebiger, an sich bekannter Art und kann an beliebiger geeigneter Stelle, z. B an dem Arm 31 oder im Innern der Reibrolle 35 platziert sein und ist daher in den Fig. nicht eigens dargestellt.

Die Schwenkbewegungsfreiheit und die Abmessungen des Armes 31 sind so gewählt, dass der Reibschluss zwischen den Rollen 32, 35 erst erzeugt wird, wenn die untere Kante 28 des Führungsbleches 21 und mit ihm die Spitze der Bindematerialbahn 17 in den Spalt 24 eintaucht. Die sich dann über die Kante 28 des Führungsbleches 21 vorschiebende Spitze der Bindematerialbahn 17 wird von der im Uhrzeigersinn rotierenden Walze 7 erfasst und zum Pressballen 11 mitgenommen. Im Laufe einer oder mehrerer Umdrehungen wird der Pressballen 11 von dem Bindematerial komplett eingehüllt.

Eine Kappeinrichtung zum Abtrennen der um den Pressballen gewickelten Bindematerialbahn 17 umfasst einen um eine gehäusefeste Achse 29 schwenkbaren Arm 38, der eine Messerklinge 30 trägt. Wenn sich die Bindematerialfördereinrichtung 19 in der Ruhestellung der Fig. 1, 4 befindet, ist die Achse 29 eng benachbart zu den Walzen 26, 27, und der Arm 38 erstreckt sich im Wesentlichen parallel zum Verlauf der Bindematerialbahn 17 zwischen den Walzen 26, 27 einerseits und der unteren Kante 28 andererseits, so dass die Messerklinge 30 kurz vor der unteren Kante 28 auf die Bindematerialbahn 17 trifft.

Wenn der Pressballen 11 fertig umhüllt ist, zieht zunächst, um seine Ausgabe aus der Presskammer 1 vorzubereiten, das Stellglied 23 die Bindematerialfördereinrichtung 19 in die Ruhestellung der Fig. 1 bzw. Fig. 4 zurück. Wie in Fig. 2, 4 und 5 zu erkennen, ist die Bewegung der Messerklinge 30 um die Achse 29 an die Bewegung der Bindematerialfördereinrichtung 19 zwischen Arbeits- und Ruhestellung durch ein Kurvenbahnglied 37 gekoppelt, das drehfest mit dem die Messerklinge 30 tragenden Arm 38 verbunden ist und eine Kurvenbahn 39 aufweist, in die ein von einem der Arme 22 abstehender und eine Laufrolle tragender Zapfen 40 eingreift. Während sich die Bindematerialfördereinrichtung 19 in der Arbeitsstellung der Fig. 5 befindet, befindet sich der Zapfen 40 an einem achsfernen Ende der Kurvenbahn 39; in der Ruhestellung der Fig. 4 befindet sich der Zapfen 40 nahe an einem achsnahen Ende der Kurvenbahn 39. Durch diese Ausrichtung der Kurvenbahn 39 wird im Laufe der Bewegung der Bindematerialfördereinrichtung 19 aus der Arbeitsstellung in die Ruhestellung der Hebelarm, mit dem der Zapfen 40 das Kurvenbahnglied 37 antreibt, immer kürzer und dementsprechend die Geschwindigkeit der Messerklinge 30 immer größer. So ist sichergestellt, dass die Messerklinge 30 in dem Moment, in dem die Bindematerialfördereinrichtung 19 wieder ihre Ruhestellung erreicht, die Bindematerialbahn 17 knapp vor der unteren Kante 28 des Führungsbleches 21 durchschlägt. Genauer gesagt hat die Kurvenbahn 39 einen kreisbogenförmigen achsfernen Abschnitt, der in der Arbeitsstellung auf die Walze 20 zentriert ist, und einen radial zur Achse 29 ausgerichteten Abschnitt. Wenn beim Übergang von der Arbeits- in die Ruhestellung der Zapfen den kreisbogenförmigen Abschnitt durchläuft, bleibt das Kurvenbahnglied 37 in Ruhe; erst wenn der Zapfen 40 den radialen Abschnitt erreicht, beginnt das Kurvenbahnglied und mit ihm die Messerklinge 30 zu schwenken.

Der Pressballen 11 wird nach Durchtrennen der Bindematerialbahn 17 noch so lange zwischen den Riemen 9 weitergedreht, bis das rückwärtige Ende des abgeschlagenen Bindematerialabschnittes auf den Pressballen 11 aufgewickelt ist. Dann kann das Gehäuse 2 geöffnet und der Pressballen 11 ausgegeben werden, und die Erzeugung eines neuen Pressballens kann beginnen.

### Bezugszeichen

- 1: Presskammer
- 2: Gehäuse
- 3: Erntegutaufnehmer
- 4: Zuführkanal
- 5: Messerwalze
- 6: Einlassspalt
- 7: Walze
- 8: Walze
- 9: Endlosriemen
- 10: Rolle
- 11: Pressballen
- 12: Rampe
- 13: Vorratsrolle
- 14: Bindematerialspender
- 15: Walze
- 16: Auflieger
- 17: Bindematerialbahn
- 18: Schikane
- 19: Bindematerialfördereinrichtung
- 20: Walze
- 21: Führungsblech
- 22: Arm
- 23: Stellglied
- 24: Spalt
- 25: Walze
- 26: Walze
- 27: Gegendruckwalze
- 28: Untere Kante
- 29: Achse
- 30: Messerklinge
- 31: Arm
- 32: Reibrolle
- 33: Handrad
- 34: Feder
- 35: Reibrolle
- 36: Zahnriemen
- 37: Kurvenbahnglied
- 38: Schwenkarm
- 39: Kurvenbahn
- 40: Zapfen
- 41: Achse
- 42: Vorsprung

## Patentansprüche

1. Ballenpresse mit einer Presskammer (1), die wenigstens eine gekoppelt an eine Drehung eines Ballens (11) in der Presskammer (1) rotierende Rolle (35) aufweist, einem Bindematerialspender (14), einer Bindematerialfördereinheit (19) zum Zuführen von vom Bindematerialspender (14) abgegebenem Bindematerial (17) zu einem Einlassspalt (24) der Presskammer (1) und einer Kappeinrichtung (29, 30, 37, 38) zum Durchtrennen des Bindematerials (17), wobei die Bindematerialfördereinheit (19) zwischen einer Ruhestellung und einer Arbeitsstellung bewegbar ist, in der eine Spitze (28) der Bindematerialfördereinheit (19) in den Einlassspalt (24) eingreift, **dadurch gekennzeichnet, dass** eine Antriebsrolle (32) der Bindematerialfördereinheit (19) in der Arbeitsstellung durch kraftschlüssigen Kontakt mit der Rolle (35) der Presskammer (1) angetrieben ist und in der Ruhestellung von der Rolle (35) der Presskammer (1) abgestellt ist.

2. Ballenpresse nach Anspruch 1, **dadurch gekennzeichnet, dass** die Kappeinrichtung (29, 30, 37, 38) an die Bewegung der Bindematerialfördereinheit (19) zwischen der Ruhestellung und der Arbeitsstellung gekoppelt ist, um das Bindematerial (17) bei Erreichen der Ruhestellung zu kappen.

3. Ballenpresse nach Anspruch 2, **dadurch gekennzeichnet, dass** die Kappeinrichtung (29, 30, 37, 38) an die Bewegung der Bindematerialfördereinheit (19) durch ein Kurvenbahnglied (37) gekoppelt ist, das von einem Zapfen (40) der Bindematerialfördereinheit (19) abgetastet wird und um eine Achse (29) schwenkbar ist.

4. Ballenpresse nach Anspruch 3, **dadurch gekennzeichnet, dass** die Bewegung der Bindematerialfördereinheit (19) eine Schwenkbewegung ist und dass eine Kurvenbahn (39) des Kurvenbahnglied (37) einen zur Achse (29) benachbarten radialen Abschnitt und einen von der Achse entfernten kreisbogenförmigen Abschnitt aufweist.

5. Ballenpresse nach einem der vorhergehenden Ansprüche, **dadurch gekennzeichnet, dass** die Bindematerialfördereinheit (19) einen Rahmen (21, 22), der wenigstens eine von dem Bindematerial (17) umschlungene Walze (26) trägt, und einen die Antriebsrolle (32) tragenden Arm (31) umfasst, der mit dem Rahmen (21, 22) schwenkbar verbunden ist und über den die Antriebsrolle (32) an die umschlungene Walze (26) drehgekoppelt ist.

6. Ballenpresse nach Anspruch 5, **dadurch gekennzeichnet, dass** der Arm (31) um die Achse (41) der umschlungenen Walze (26) schwenkbar ist.

7. Ballenpresse nach Anspruch 5 oder 6, **dadurch gekennzeichnet, dass** die Antriebsrolle (32) und die umschlungene Walze (26) durch einen Riemen- oder Kettentrieb gekoppelt sind.

8. Ballenpresse nach Anspruch 5, 6 oder 7, **dadurch gekennzeichnet, dass** die umschlungene Walze (26) zusammen mit einer Gegendruckwalze (27) einen das Bindematerial (17) klemmenden Spalt begrenzt.

9. Ballenpresse nach einem der Ansprüche 5 bis 8, **dadurch gekennzeichnet, dass** die Umfangsgeschwindigkeit der über die Antriebsrolle angetriebenen umschlungenen Walze (26) kleiner als die des Ballens (11) ist und dass ein Freilauf zwischen der Antriebsrolle (32) und der umschlungenen Walze (26) angeordnet ist, der eine Drehung der Walze (26) mit einer höheren Umfangsgeschwindigkeit ermöglicht.

10. Ballenpresse nach einem der Ansprüche 5 bis 8, **dadurch gekennzeichnet, dass** die Umfangsgeschwindigkeit der über die Antriebsrolle angetriebenen umschlungenen Walze (26) kleiner als die des Ballens (11) ist und dass die Rolle (35) der Presskammer (1) über einen Freilauf angetrieben ist, der eine Drehung der Walze (26) mit einer höheren Umfangsgeschwindigkeit ermöglicht.

11. Ballenpresse nach einem der vorhergehenden Ansprüche, **dadurch gekennzeichnet, dass** die Bindematerialfördereinheit (19) um eine zweite von dem Bindematerial (17) umschlungene Walze (20) zwischen der Ruhestellung und der Arbeitsstellung schwenkbar ist.

12. Ballenpresse nach einem der vorhergehenden Ansprüche, **dadurch gekennzeichnet, dass** die Kappeinrichtung (29, 30, 37, 38) ein um eine Achse (29) schwenkbares Messer (30) und ein mit dem Messer (30) drehfest verbundenes und mit der Bindematerialfördereinheit (19) im Eingriff stehendes Kurvenbahnglied (37) umfasst.

13. Ballenpresse nach Anspruch 12, **dadurch gekennzeichnet, dass** die Bindematerialfördereinheit (19) in der Ruhestellung der Achse (29) des Messers (30) näher benachbart ist als in der Arbeitsstellung.

14. Ballenpresse nach einem der vorhergehenden Ansprüche, **dadurch gekennzeichnet, dass** die Kappeinrichtung (29, 30, 37, 38) eingerichtet ist, das Bindematerial (17) innerhalb der Bindematerialfördereinheit (19) zu durchtrennen.

15. Ballenpresse nach einem der vorhergehenden Ansprüche, **dadurch gekennzeichnet, dass** die Spitze (28) der Bindematerialfördereinheit (19) durch eine Führungsplatte (21) gebildet ist, an deren Unterseite das Bindematerial (17) entlang geführt ist, und dass in der Ruhestellung die Kappeinrichtung (29, 30, 37, 38) das Bindematerial (17) an der Führungsplatte (21) durchtrennt.

## Claims

1. Baling press having a pressing chamber (1) which has at least one roller (35) which rotates in the pressing chamber (1) while coupled to the rotation of a bale (11), having a dispenser (14) of binding material, having a binding-material feeding unit (19) for feeding binding material (17), dispensed by the dispenser (14) of binding material, to an inlet gap (24) of the pressing chamber (1) and having a cutting arrangement (29, 30, 37, 38) for severing the binding material (17), the binding-material feeding unit (19) being movable between a rest position and a working position in which a tip (28) of the binding-material feeding unit (19) engages in the inlet gap (24), **characterised in that**, in the working position, a drive roller (32) belonging to the binding-material feeding unit (19) is driven by frictional contact with the roller (35) in the pressing chamber (1) and, in the rest position, is positioned away from the roller (35) in the pressing chamber (1).

2. Baling press according to claim 1, **characterised in that** the cutting arrangement (29, 30, 37, 38) is coupled to the movement of the binding-material feeding unit (19) between the rest position and the working position in order to cut the binding material (17) when the rest position is reached.

3. Baling press according to claim 2, **characterised in that** the cutting arrangement (29, 30, 37, 38) is coupled to the movement of the binding-material feeding unit (19) by a slideway member (37) which is followed by a projecting follower (40) belonging to the binding-material feeding unit (19) and which can be pivoted about an axis (29).

4. Baling press according to claim 3, **characterised in that** the movement of the binding-material feeding unit (19) is a pivoting movement and **in that** a slideway belonging to the slideway member (37) has a radial portion adjacent to the axis and shaft (29) and an arcuate portion remote from the axis.

5. Baling press according to one of the foregoing claims, **characterised in that** the binding-material feeding unit (19) comprises a frame (21, 22) which carries at least one roller (26) around which the binding material (17) is passed and an arm (31) which carries the drive roller (32), which arm (31) is pivotably connected to the frame (21, 22) and by which arm (31) the drive roller (32) is coupled in rotation to the roller (26) around which passage takes place.

6. Baling press according to claim 5, **characterised in that** the arm (31) can be pivoted about the axis (41) of the roller (26) around which passage takes place.

7. Baling press according to claim 5 or 6, **characterised in that** the drive roller (32) and the roller (26) around which passage takes place are coupled by a belt or chain transmission.

8. Baling press according to claim 5, 6 or 7, **characterised in that**, together with a mating pressure-applying roller (27), the roller (26) around which passage takes place defines a gap in which the binding material (17) is clamped.

9. Baling press according to one of claims 5 to 8, **characterised in that** the peripheral speed of the roller (26) around which passage takes place and which is driven by the driver roller is less than that of the bale (11), and **in that** there is arranged between the drive roller (32) and the roller (26) around which passage takes place a free-wheel mechanism which allows the roller (26) to rotate at a higher peripheral speed.

10. Baling press according to one of claims 5 to 8, **characterised in that** the peripheral speed of the roller (26) around which passage takes place and which is driven by the driver roller is less than that of the bale (11), and **in that** the roller (35) in the pressing chamber (1) is driven via a free-wheel mechanism which allows the roller (26) to rotate at a higher peripheral speed.

11. Baling press according to one of the foregoing claims, **characterised in that** the binding-material feeding unit (19) can be pivoted between the rest position and the working position about a second roller (20) around which the binding material (17) is passed.

12. Baling press according to one of the foregoing claims, **characterised in that** the cutting arrangement (29, 30, 37, 38) comprises a blade (30) which can be pivoted about an axis (29) and comprises a slideway member (37) which is connected to the blade (30) to be solid in rotation therewith and which engages which the binding-material feeding unit (19).

13. Baling press according to claim 12, **characterised in that** the binding-material feeding unit (19) is closer to the axis (29) belonging to the blade (30) in the rest position than it is in the working position.

14. Baling press according to one of the foregoing claims, **characterised in that** the cutting arrangement (29, 30, 37, 38) is set up to sever the binding material (17) within the binding-material feeding unit (19).

15. Baling press according to one of the foregoing claims, **characterised in that** the tip (28) of the binding-material feeding unit (19) is formed by a guiding plate (21) over the underside of which the binding material (17) is guided, and **in that**, in the rest position, the cutting arrangement (29, 30, 37, 38) severs the binding material (17) against the guiding plate (21).

## Revendications

1. Presse à balles ayant une chambre de pressage (1) qui a au moins un rouleau (35) qui tourne dans la chambre de pressage (1) tout en étant accouplé à la rotation d'une balle (11), ayant un distributeur (14) de matériau de liage, ayant une unité d'alimentation en matériau de liage (19) pour alimenter le matériau de liage (17), distribué par le distributeur (14) de matériau de liage, à une fente d'introduction (24) de la chambre de pressage (1) et ayant un dispositif de coupe (29, 30, 37, 38) pour trancher le matériau de liage (17), l'unité d'alimentation en matériau de liage (19) étant mobile entre une position de repos et une position de travail dans laquelle une pointe (28) de l'unité d'alimentation en matériau de liage (19) s'engage dans la fente d'introduction (24), **caractérisée en ce que**, dans la position de travail, un rouleau d'entraînement (32) appartenant à l'unité d'alimentation en matériau de liage (19) est entraîné par contact frictionnel avec le rouleau (35) de la chambre de pressage (1) et, dans la position de repos, est positionné à une certaine distance du rouleau (35) de la chambre de pressage (1).

2. Presse à balles selon la revendication 1, **caractérisée en ce que** le dispositif de coupe (29, 30, 37, 38) est accouplé au mouvement de l'unité d'alimentation en matériau de liage (19) entre la position de repos et la position de travail afin de couper le matériau de liage (17) lorsque la position de repos est atteinte.

3. Presse à balles selon la revendication 2, **caractérisée en ce que** le dispositif de coupe (29, 30, 37, 38) est accouplé au mouvement de l'unité d'alimentation en matériau de liage (19) par un membre guide (37) qui est suivi par un goujon (40) appartenant à l'unité d'alimentation en matériau de liage (19) et que l'on peut faire pivoter autour d'un axe (29).

4. Presse à balles selon la revendication 3, **caractérisée en ce que** le mouvement de l'unité d'alimentation en matériau de liage (19) est un mouvement de pivotement et **en ce qu'**un guide (39) appartenant au membre guide (37) a une portion radiale adjacente à l'axe (29) et une portion curviligne loin de l'axe.

5. Presse à balles selon l'une des revendications précédentes, **caractérisée en ce que** l'unité d'alimentation en matériau de liage (19) comprend un cadre (21, 22) qui porte au moins un rouleau (26) autour duquel on fait passer le matériau de liage (17) et un bras (31) qui porte le rouleau d'entraînement (32), lequel bras (31) est pivotablement connecté au cadre (21, 22) et par lequel bras (31) le rouleau d'entraînement (32) est accouplé en rotation au rouleau (26) autour duquel le passage a lieu.

6. Presse à balles selon la revendication 5, **caractérisée en ce que** l'on peut faire pivoter le bras (31) autour de l'axe (41) du rouleau (26) autour duquel le passage a lieu.

7. Presse à balles selon la revendication 5 ou 6, **caractérisée en ce que** le rouleau d'entraînement (32) et le rouleau (26) autour duquel le passage a lieu sont accouplés par une transmission par courroie ou chaîne.

8. Presse à balles selon la revendication 5, 6 ou 7, **caractérisée en ce que**, avec un rouleau applicateur de pression conjugué (27), le rouleau (26) autour duquel le passage a lieu définit une fente dans laquelle le matériau de liage (17) est serré.

9. Presse à balles selon l'une des revendications 5 à 8, **caractérisée en ce que** la vitesse périphérique du rouleau (26) autour duquel le passage a lieu et qui est entraîné par le rouleau d'entraînement est inférieure à celle de la balle (11), et **en ce qu'**il est disposé entre le rouleau d'entraînement (32) et le rouleau (26) autour duquel le passage a lieu un mécanisme de roue libre qui permet au rouleau (26) de tourner à une vitesse périphérique plus élevée.

10. Presse à balles selon l'une des revendications 5 à 8, **caractérisée en ce que** la vitesse périphérique du rouleau (26) autour duquel le passage a lieu et qui est entraîné par le rouleau d'entraînement est inférieure à celle de la balle (11), et **en ce que** le rouleau (35) de la chambre de pressage (1) est entraîné par l'intermédiaire d'un mécanisme de roue libre qui permet au rouleau (26) de tourner à une vitesse périphérique plus élevée.

11. Presse à balles selon l'une des revendications précédentes, **caractérisée en ce que** l'on peut faire pivoter l'unité d'alimentation en matériau de liage (19) entre la position de repos et la position de travail autour d'un deuxième rouleau (20) autour duquel on fait passer le matériau de liage (17).

12. Presse à balles selon l'une des revendications précédentes, **caractérisée en ce que** le dispositif de coupe (29, 30, 37, 38) comprend une lame (30) que l'on peut faire pivoter autour d'un axe (29) et comprend un membre guide (37) qui est connecté à la lame (30) pour être solidaire en rotation avec cette dernière et qui s'engage avec l'unité d'alimentation en matériau de liage (19).

13. Presse à balles selon la revendication 12, **caractérisée en ce que** l'unité d'alimentation en matériau de liage (19) est plus près de l'axe (29) appartenant à la lame (30) dans la position de repos qu'elle ne l'est dans la position de travail.

14. Presse à balles selon l'une des revendications précédentes, **caractérisée en ce que** le dispositif de coupe (29, 30, 37, 38) est destiné à trancher le matériau de liage (17) dans l'unité d'alimentation en matériau de liage (19).

15. Presse à balles selon l'une des revendications précédentes, **caractérisée en ce que** la pointe (28) de l'unité d'alimentation en matériau de liage (19) est formée par une plaque de guidage (21) sur le dessous de laquelle le matériau de liage (17) est guidé, et **en ce que**, dans la position de repos, le dispositif de coupe (29, 30, 37, 38) tranche le matériau de liage (17) contre la plaque de guidage (21).
